# EUROPEAN PATENT SPECIFICATION

(11) **EP 2 973 982 B1**
(45) Date of publication and mention of the grant of the patent: **05.05.2021**
(21) Application number: 13877614.1
(22) Date of filing: 15.03.2013
(51) Int. Cl.: H02M 1/00, H02J 3/38, H02M 7/49, H02N 10/00, H02M 3/158

(54) **HIGH EFFICIENCY INTERLEAVED SOLAR POWER SUPPLY SYSTEM**
HOCHEFFIZIENTES UND VERSCHACHTELTES SOLARSTROMVERSORGUNGSSYSTEM
SYSTÈME D'ALIMENTATION ÉLECTRIQUE SOLAIRE ENTRELACÉ DE HAUT RENDEMENT

(43) Date of publication of application: 20.01.2016
(60) Divisional application: 17150670.2
(73) Proprietor: AMPT, LLC, Fort Collins, CO 80525 (US)
(72) Inventor: LEDENEV, Anatoli, Fort Collins, CO 80525 (US)
(74) Representative: Kador & Partner PartG mbB
(86) International application number: PCT/US2013/032410
(87) International publication number: WO 2014/143021

(56) References cited:
- EP-A2- 2 515 424
- US-A- 4 634 943
- US-A1- 2003 218 449
- US-A1- 2009 020 151
- US-A1- 2010 253 150
- US-A1- 2012 032 515
- US-A1- 2012 043 818
- US-B2- 8 273 979

## Description

### I. TECHNICAL FIELD

The present invention focuses on the field of providing solar power including but not limited to residential and commercial power systems and arrays. In particular it relates to processes, devices, and circuitry that can provide such power in a more efficient manner. It also can find application in general power systems that have some of the more fundamental attributes of solar power sources with the same effects.

### II. BACKGROUND

The value of solar power for society has been known for many years. It offers clean energy but requires harnessing the energy and feeding it into electrical grid or other load. Efficiency in generation is of particular interest. One aspect that has proven particularly challenging is the ability to harvest the energy efficiently across the entire power spectrum desired. Because the influx of solar energy can vary and because the photovoltaic effect itself can vary, electrical challenges exist that to some degree remain. In addition to the technical issues, regulatory limits such as desirable for safety and the like can also pose challenges. In addition, the combination of photovoltaic sources such as in the strings of panels or the like combines to make efficient harvesting of the energy an issue. As an example, an interesting fact that is frequently under the current technology the most efficient generation of power (likely at the highest voltage after conversion) is a situation where no substantial power is delivered. This seeming paradox is an issue that remains challenging for those in the field. Similarly the desire to generate more and more power such as through larger strings of panels has become an issue due to regulatory limits and the like.

The present invention provides circuits and methods through which many of these challenges can be reduced or even eliminated. It provides designs with unusual efficiency in power generation and provides considerable value to those desiring to utilize solar or other power sources efficiently EP 2 515 424 A2 is concerned with a DC-DC converter. The converter has a primary half-bridge which is connected in parallel to a primary terminal and is provided with a series circuit comprising switching elements. A secondary half bridge is connected in parallel to a secondary terminal and is provided with a series circuit comprising switching elements.

Switching circuits for extracting power from an electric power source is disclosed in US 2012/0043818 A1. Each switching circuit includes an input port electrically coupled to a respective one of an electric power source, an output port, and a first switching device adapted to switch between its conductive and nonconductive states to transfer power from the input port to the output port.

US 2003/0218449 discloses methods and circuitry for combining the outputs of multiphase power converters.

A control device for a switching arrangement with a direct current source feeding a load through a semiconductor rectifier regulator unit having two controllable semiconductor rectifier elements of identical conductance direction as part of the regulator unit is disclosed in US 4,634,943.

### III. DISCLOSURE OF INVENTION

Accordingly, the present invention discloses devices and methods to achieve unusually high efficiency solar and other power delivery in a way that is more beneficial to a variety of loads. The embodiments present some initial ways to achieve high efficiency power delivery or generation and show the general understandings which may be adapted and altered to achieve the following and other goals. The invention is defined by the features of independent method claim 1 and corresponding apparatus claim 11. The dependent claims recite advantageous embodiments of the invention.

### IV. BRIEF DESCRIPTION OF DRAWINGS

Figure 1 is a schematic of circuitry as configured for a phased interleave embodiment of the present invention.
Figures 2a and 2b are timing diagrams to achieve control according to various embodiments of the present invention.
Figure 3 is an efficiency related type of value diagram conceptually comparing several operational modes of the present invention with some traditional systems.
Figure 4 is a schematic of circuitry as configured for a tapped coupled inductor embodiment of a phased interleave design for the present invention.
Figure 5 is a schematic of tapped coupled inductor circuitry as configured for a portion of an additive string voltage embodiment of the present invention.
Figure 6 is a schematic of circuitry as configured for one interpanel configuration embodiment of the present invention.
Figure 7 is a schematic of circuitry as configured for one more phased string example.
Figure 8 is a conceptual diagram of boundary controlled modes of the present invention.
Figure 9 discloses timing diagrams to achieve control of the example solar energy system of figure 7.

### V. MODE(S) FOR CARRYING OUT THE INVENTION

As mentioned earlier, the present invention includes a variety of aspects, which may be combined in different ways. The following descriptions are provided to list elements and describe some of the embodiments of the present invention. These elements are listed with initial embodiments, however it should be understood that they may be combined in any manner and in any number to create additional variations. The variously described examples and preferred embodiments should not be construed to limit the present invention to only the explicitly described systems, techniques, and applications. Further, this description should be understood to support and encompass descriptions and claims of all the various embodiments, systems, techniques, methods, devices, and applications with any number of the disclosed elements, with each element alone, and also with any and all various permutations and combinations of all elements in this or any subsequent application.

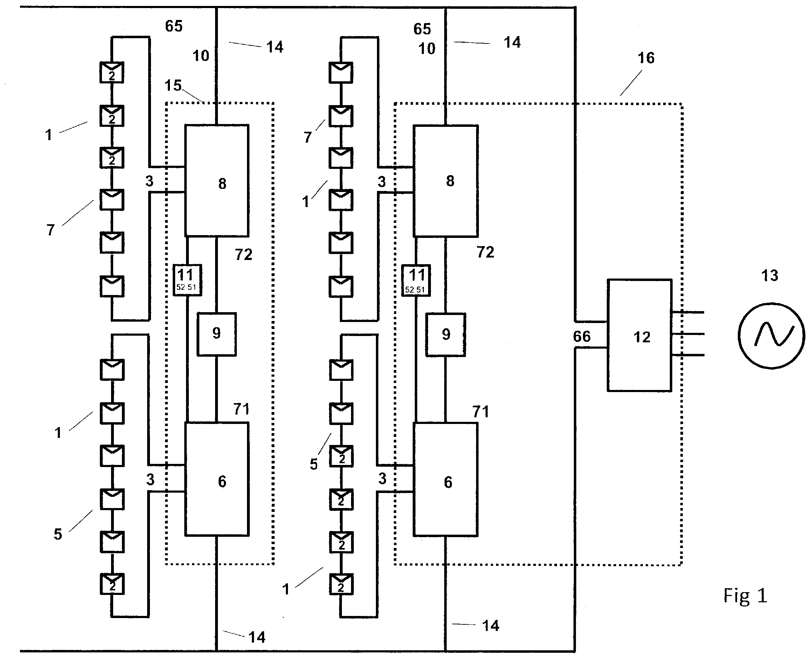

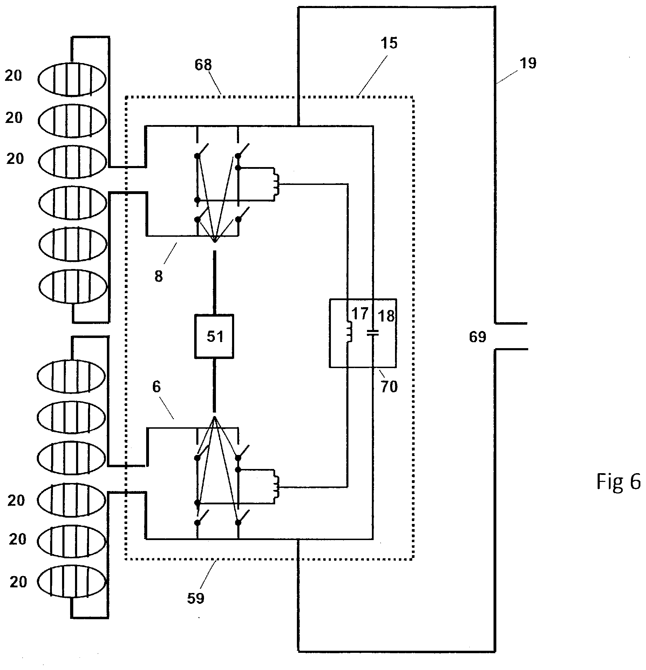

As shown in figure 1, solar power generation can involve accepting one more sources of power (1) such as may be generated by one or more individual photovoltaic sources (2). As is well known, the photovoltaic source can be a solar panel (19)(as shown in figure 6) or even individual solar cells (20)(also as shown in figure 6). In figure 1, the sources (2) can be aggregated to create one conceptual photovoltaic source of power (1). The individual output (3) from one of the photovoltaic sources (2) may be a DC power output. This DC power output (3) can be converted into a modified version of DC power. This may, but need not occur at the module level, such as by a module or other type of converter which is not shown but which could, but need not exist for each panel (19) or each photovoltaic source (2). Such a converter may be configured to operate on or with individual panels or modules and can control power harvesting to achieve individual maximum power point operation as is known.

As mentioned, in an embodiment of the present invention such as shown in figure 1, the output of a collection of solar panels or more generally sources (2) can be aggregated to create one conceptual photovoltaic source of power (1). This, perhaps aggregated, source of power, also a DC power output, and here considered a first photovoltaic source of power (5), may be further handled or converted by a DC-DC photovoltaic converter, perhaps here shown as a base phase DC-DC photovoltaic converter (6) to provide a base phase switched output (71).

Similarly, another aggregated source of power, here considered a second photovoltaic source of power (7), may also be converted by a DC-DC photovoltaic converter, here shown as an altered phase DC-DC photovoltaic converter (8) to provide an altered phase switched output (72). Both the base phase DC-DC photovoltaic converter (6) and the altered phase DC-DC photovoltaic converter (8) can have their outputs combined through combiner circuitry (9), to provide a conversion combined photovoltaic DC output (10). In addition, both the base phase DC-DC photovoltaic converter (6) and the altered phase DC-DC photovoltaic converter (8) can be similarly controlled, such as through a synchronous phase control (11) that synchronously operates switches or the like in the two converters so their operations are switch timing responsive in sync with each other, whether opposing or otherwise. Both the base phase DC-DC photovoltaic converter (6) and the altered phase DC-DC photovoltaic converter (8) can be considered combined as together presenting a low photovoltaic energy storage DC-DC photovoltaic converter (15) which can act on two sources or power (1) and can provide a low photovoltaic energy storage DC output (65). These outputs may be combined to present an array or other enhanced low photovoltaic energy storage DC output (66).

In typical applications, it is common for the conversion combined photovoltaic DC output (10) to be provided as an input to a load, shown as a photovoltaic DC-AC inverter (12) as but one possibility. The photovoltaic DC-AC inverter (12) can provide a photovoltaic AC power output (13). This may be connected to a grid or the like. As also shown, strings of such power can be connected in parallel (14) to provide greater power to the photovoltaic DC-AC inverter (12). It is also possible to provide an integrated system such as by having both the low photovoltaic energy storage DC-DC photovoltaic converter (15) and the photovoltaic DC-AC inverter (12) integrated to present a combined high efficiency DC-DC-AC photovoltaic converter (16).

In operation, the system can accept first power from the first photovoltaic source of power (5), accomplish base phase DC-DC conversion to create a base phase DC power delivery through the base phase DC-DC photovoltaic converter (6). In similar fashion accepted power from a second source of power such as the second photovoltaic source of power (7) can be converted through an altered phase DC-DC converting process to provide and create an altered phase DC power delivery. Both the base phase DC-DC photovoltaic converter (6) and the altered phase DC-DC photovoltaic converter (8) can have switches to achieve their operations. These switches can be controlled by some type of controller perhaps a synchronous phase control (11). The output of the altered phase DC power delivery and the base phase DC power delivery can be combined to achieve the mentioned conversion combined photovoltaic DC output (10).

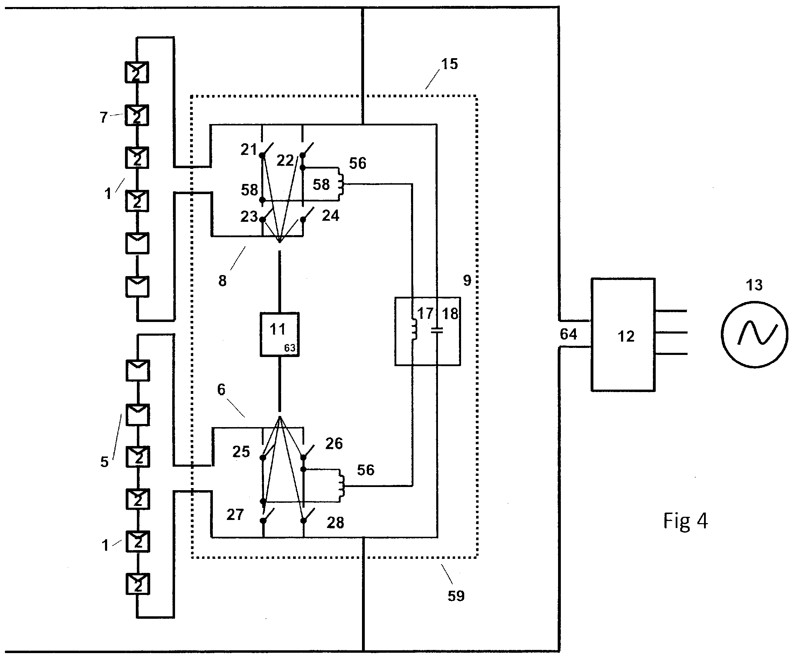

To allow for greater power generation, it is possible that the process of combining the different power deliveries can involve the process of series combining the power deliveries. The combiner circuitry (9) can be configured as series power configured circuitry so that voltage or the like of the two power generators are added. As discussed later in reference to figures 4, 6, and 7, it can be understood that the combiner circuitry (9) can involve one or more of either or both an inductance and/or a capacitance. These elements can be configured to have unusually low energy storage requirements for a photovoltaic system, and so the present invention can achieve unusually low input and output converter energy storage as discussed later. In such a configuration, the circuitry can be considered as involving a low photovoltaic energy storage inductor (17) and/or a low photovoltaic storage capacitor (18) of which the low photovoltaic energy storage DC-DC converter (59) is comprised. When configured as a series power combining circuit, the combiner circuitry (9) can present additive voltage circuitry that adds the output voltage of one power supply such as the base phase switched output to the output voltage of another power supply such as the altered phase switched output. The step of adding voltage can allow greater power generation or delivery efficiency while not exceeding the regulatory limits as mentioned earlier. It can also be achieved by low inductance adding of the voltages through the teachings of the present invention.

As mentioned, the converters can be based on a switch-mode type of operation. Such converters can have a number of different switches through which operations can achieve the desired goals. Varying types of converters are shown in different embodiments of the present invention. As shown in figures 4, 5, 6, and 7, the converters can have switches (e.g., 21-46) that can be controlled to achieve the desired goals. This control can be specific to embodiments of the present invention and can be an important aspect in achieving the goals as desired as well as an important difference in operation as compared to previous similar circuitries. Further, some of the switches such as those labeled (44 & 45 and the like) can be active switches, diodes, or even a combination of diodes with an active switch. The affirmative control of the switches can be by the synchronous phase control (11) as mentioned earlier. As shown in Figure 1, one literal or conceptual synchronous control can activate multiple converters so that their switches are synchronous in operation. Naturally, two or more separate controls with a common timing can be used as long as their clock cycles are common so that the two converters are operated under one timing mode.

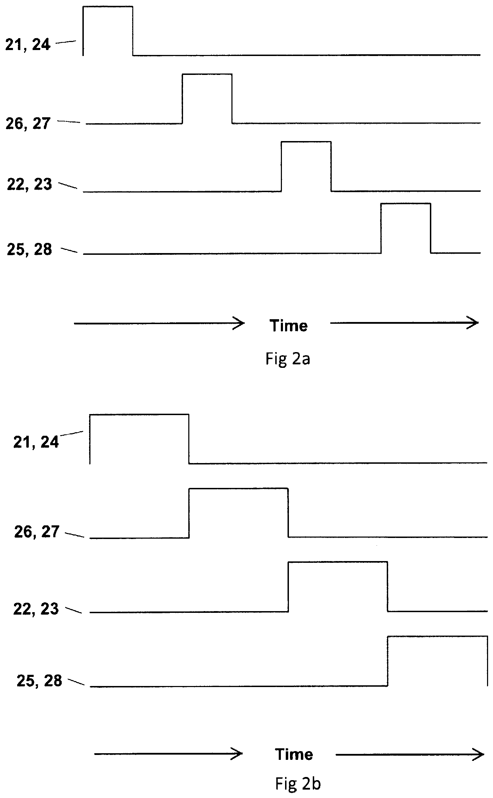

Control can be by duty cycle controlling the switches in the converters. A duty cycle controller (51) can be provided common to both converters as shown, and as such it can be considered a common duty cycle controller to achieve the step of common duty cycle control so that switches in the two converters can be operated synchronously according to desired schedules. By providing a common controller or at least synchronously controlling the converters, embodiments of the invention can be considered as providing a common timing signal for switch operation. This common timing signal can specifically cause modes of operation in accordance with the invention. For example, figures 2a and 2b show some examples of this common timing signal for the tapped magnetically coupled inductor embodiments of the invention such as shown in figure 4. In these figures, a roughly 25% (figure 2b) and 12½% (figure 2a) duty cycle operation is conceptually presented showing the operation of switches (21-28) as indicated. Although not shown, operation from 0% to 100% is possible, of course. As may be understood in the context of comparing the operations of switches (21 & 24), switches (26 & 27), switches (22 & 23), and switches (25 & 28) the synchronous and opposing modes of control can be seen. These switches can be sequentially operated so that the outputs of each converter oppose each other and switched at different times. As may be appreciated from figure 2b, this can offer advantages such that the opposing modes of operation can compensate for and offset an effect of each other in the combiner circuitry (9) and thus allow lower energy storage and more efficient operation. By presenting an opposing phase controller (52), embodiments of the invention can be configured such that one converter is on, generating power, active or the like when another is off or the like and vice versa. Through such affirmative control of switches, opposing phase controlling of the step of converting the power can achieve the reductions in energy storage as well as reduced ripple and other advantages. This opposing phase controller (52) can be diametrically opposing such as by providing a 180° photovoltaic converter switch controller and 180° photovoltaic converter switch controlling the DC output or the converters as shown. In this fashion the converter components can deliver power according to an interleaved schedule or process to effect advantages mentioned.

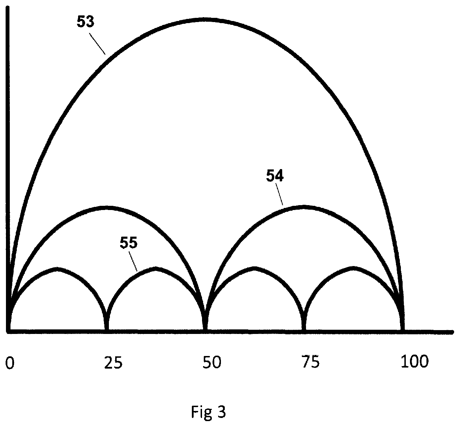

Similarly, by the interleave design, advantages can also be achieved. This can the understood conceptually with reference to figure 3 with the bottom axis representing the percentage of duty cycle operation. Perhaps non-quantitatively, figure 3 can be understood as representing an efficiency type of value across the duty cycles ranges. It also compares one traditional operation with some of the improved modes of operation. In the previous systems, converters may have presented efficiency (or more appropriately inefficiency) across a 0% to 100% duty cycle range as shown conceptually in figure 3 by the curve labeled (53). By understanding that for some values and in some instances the figure 3 conceptual plot can be considered as presenting inefficiency or even a conversion energy along a vertical axis, it can be seen that significant inefficiency exists for many traditional systems at anything other than the 0% and 100% duty cycle areas. From this, it can be conceptually understood that in many traditional operating modes (designs with a full duty cycle energy configuration), converters were often least efficient at a midpoint of operation. They were most efficient at the 0% duty cycle of operation (no power) and also at the 100% duty cycle mode of operations (no conversion) but these can be less significant from a conversion perspective. Thus as those skilled in the art well understood, during the most significant situations of power generation or at least delivery, such as in the 50% to 100% duty cycle range of operation - often the most common locations -- the converter was on average not that efficient. For example, for a maximum 60 volt panel output, a more traditional, full cycle ripple energy converter could provide an output ranging from 0 to 60 volts. At 0% duty cycle (0 volts), there was no power delivered; at 50% duty cycle there was power but at worst efficiency; at 100% there was no conversion achieved. Embodiments of the present invention show that this mode of operation can be improved upon. As explained later, entire efficiency is enhanced by the phased modes of operation now available through the present invention.

With respect to the curve labeled as (54), one can understand that this particular mode shows operation of embodiments designed to achieve a half duty cycle energy configuration. As may be conceptually understood from this plot, the efficiency can be improved (inefficiency reduced) through embodiments of the present invention. Similarly in the curve labeled (55), an operation mode using a half duty cycle energy configuration with or without the phased operational mode can be understood. As shown, even further advantages can be achieved (this may not be available for some of the embodiments of the present invention). Even the aspect of varying the voltage across all operational regimes is changed for embodiments of the present invention. Output voltage does not vary in this manner for the present invention, it remains relatively constant and so a high delivery voltage (itself a more efficient way to deliver power) can be achieved.

Figure 3 can be considered as indicating amount of ripple such as through the low photovoltaic storage energy inductor (17) or the like, ripple current storage energy, and even the sweet spot character across the various duty cycles. The number of sweet spots available in operation, with substantial power delivery, for the high efficiency conversion operations according to the present invention is improved. Sweet spots (highest practical efficiency and/or relatively little or no inefficiency) can be understood to exist at locations on the plot where it touches the bottom axis. A sweet spot can exist for some traditional circuitry at 0% and 100% of operation. Unfortunately, these are often locations of least interest as they may be less common or at least may not involve substantial power delivery. In embodiments of the present invention, sweet spots can exist at 50% and 100% or even at 25% and 50%. Through such designs and mode of operation, embodiments can thus provide an augmented sweet spot photovoltaic output. These augmented sweet spots can now exist even at substantial power conversion locations of operation and can be an effect caused by the new opposing phase mode of operational control by the synchronous control (11). As shown in figure 3, for embodiments of the present invention, a sweet spot can now exist even at locations where significant power conversion occurs, not just at extremes of operational modes as in many traditional designs. Thus, the invention can provide a converted power generation or delivery sweet spot photovoltaic output as well as an augmented sweet spot photovoltaic output. As is well known, solar panels can have temperature effects; they generate power differently in different temperature conditions, and to a significant extent the variation in duty cycle can be due to this (as well as partial shading, etc.). In fact, the depiction in figure 3 can be considered as indicating a temperature effect with a hot temperature power generation condition more likely at the 100% duty cycle and a cold temperature power generation condition more likely at the 50% duty cycle for maximum power harvesting. For many traditional systems operation at a colder temperature had a mode of relatively lower conversion efficiency. Through embodiments of the invention, high efficiency can exist at such reduced temperature power generation conditions and the invention can thus present a photovoltaically reduced temperature condition sweet spot photovoltaic output. For certain designs, it can even present a cold operational regime sweet spot photovoltaic output. As shown in figure 3, for embodiments of the present invention, a sweet spot can exist at the 50% duty cycle range rather than a poorly efficient level of power delivery, not just a top as in many traditional designs and so the invention can provide a cold operational regime sweet spot photovoltaic power output.

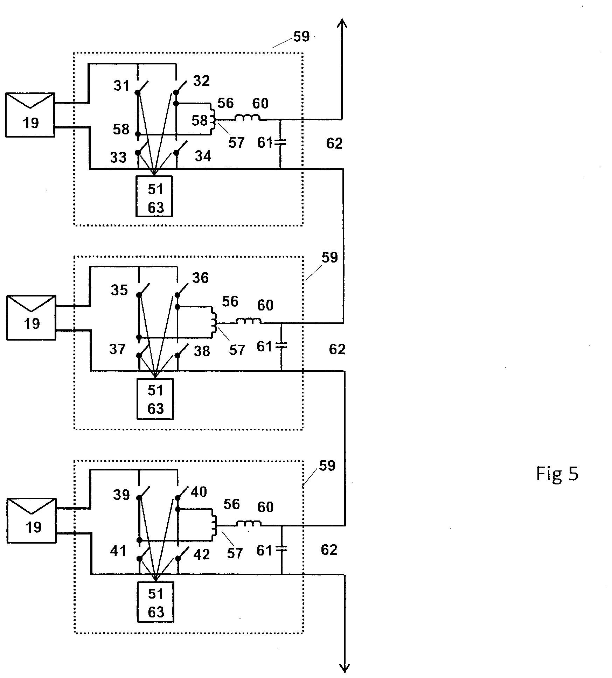

As mentioned above, converters may be affirmatively switched to achieve best modes of operation. A variety of converter topologies are possible and several are shown in the figures. Figure 5 shows a particular type of converter as applied to an individual panel that has a tapped magnetically coupled inductor element (56). This is one example of a tapped magnetically coupled inductor arrangement. As shown the tapped magnetically coupled inductor element (56) has an inductor tap (57). This embodiment is affirmatively switched through switches (31 through 42) for the various converters as shown in figure 5. These switches are activated by a duty cycle controller (51) to which the converter is switch timing responsive. As shown, this converter can include two pairs of series switches (e.g., 31 & 33)(32 & 34) connected at midpoints (58) at which the tapped magnetically coupled inductor element (56) is connected.

Each low photovoltaic energy storage DC-DC photovoltaic converter (59) can include its own low photovoltaic energy storage inductor (60) and low energy storage output capacitor (61) so as to provide a low photovoltaic inductance DC output (62). Figure 5 shows multiple applications of the tapped magnetically coupled inductor arrangements whereby each converts its own power output, perhaps such as from a solar panel (19). These converted, high efficiency photovoltaic outputs (62) may be series combined as shown to present an output string. Only a portion of a typical string is depicted. Often numerous panels are combined to approach the maximum allowed operating voltage. In this embodiment, however, an excess voltage arrangement can be configured. By using a half duty cycle energy configuration and individual power source conversion as shown, the string can be configured to provide a double maximum voltage arrangement such that a maximum regulatory or other allowed output can be one-half of the theoretically available panel voltage output. To stay under the maximum amount, the output can be boundary limited by including a photovoltaic boundary output controller (63) which may be part of each individual duty cycle controller, as depicted, or which may be conceptually a collective control for all converters in the string. For configurations applying a quarter duty cycle energy configuration and the individual power source conversion as shown, the string can even be configured to provide a quadruple maximum voltage arrangement such that a maximum regulatory or other allowed output can be one-quarter of the theoretically available panel voltage output. Additional duty cycle energy options (one-eighth, one-tenth, etc.) are also possible, of course. Again, a photovoltaic boundary output controller (63) can be included. Importantly, even with this boundary limitation, power is still harvested efficiently. Embodiments of the invention can be extremely efficient as compared to traditional designs. In fact, the invention can present a photovoltaic output that is at least about 98%, 99%, and 99.5% efficient from the perspective of its conversion process across a duty cycle range (averaged across the range of operation, an occurrence-based range of delivery, or a range of typical expected operation). It can even approach only wire losses in delivering power. Traditional designs rarely can achieve this level of efficiency.

For embodiments utilizing phased operational modes, interconnection and operation such as shown in figure 4 can be achieved. In this embodiment, the two pairs of series switches (e.g., 21 & 23)(22 & 24) connected at midpoints (58), can have the output from the tapped magnetically coupled inductor element (56) combined such as through the low photovoltaic energy storage inductor (17) so as to provide a low photovoltaic inductance DC output (64), and also a low energy storage output capacitor (18) to present another type of low photovoltaic energy storage DC-DC photovoltaic converter (59). In similar fashion to that of the individual panel conversion design of figure 5, the arrangement of figure 4 can also have an excess voltage arrangement. Such configurations can be of a half duty cycle energy configuration and so a half duty cycle controller can be used with the converted string configured to provide a double maximum voltage arrangement. In this configuration, again, to stay under the maximum amount, the output can be boundary limited by including a photovoltaic boundary output controller (63).

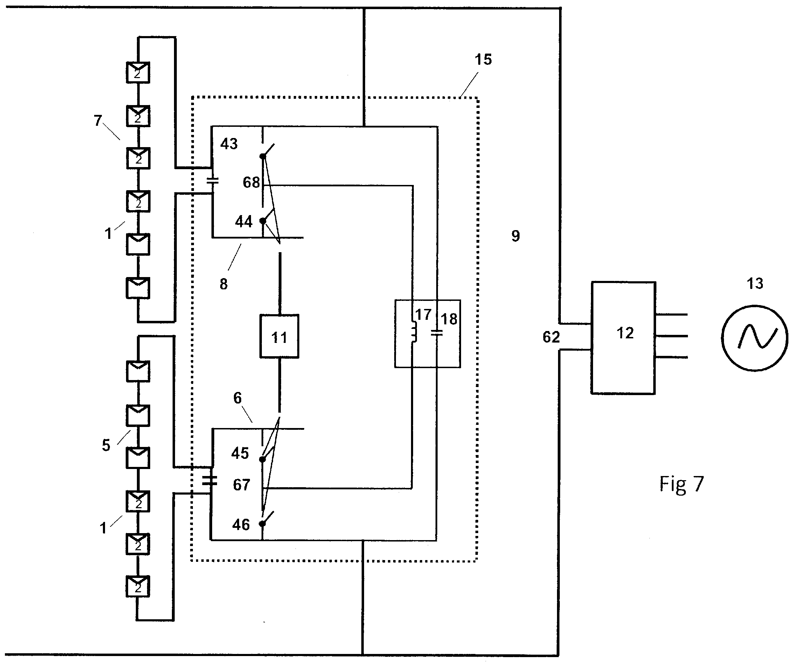

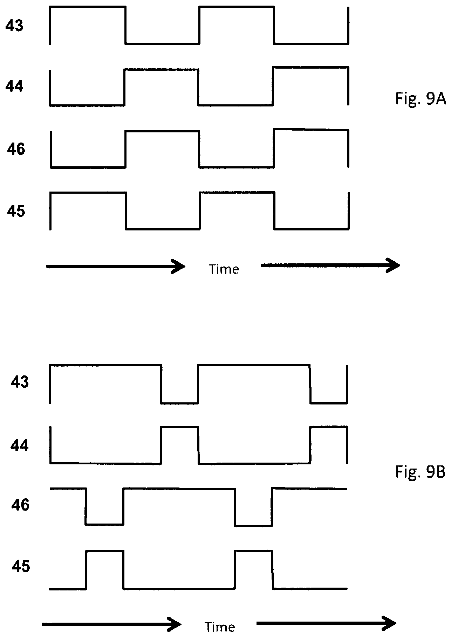

Embodiments such as the phased converter shown in figure 4 can also be achieved through a buck power converter appearing arrangement such as shown in the example of figure 7. In this example circuitry resembling two buck DC-DC power converters can be used to create one high efficiency converter such as the low photovoltaic energy storage DC-DC photovoltaic converter (15) shown. In this example, two pairs of series switches (43 & 44)(45 & 46) connected at midpoints (67) can have the output from the switched element combined such as through the low photovoltaic energy storage inductor (17) so as to provide a low photovoltaic inductance DC output (62), and also a low energy storage output capacitor (18) to present the low photovoltaic energy storage DC-DC photovoltaic converter (15). Figures 9a and 9b show some examples of this common timing signal for this example.

In these figures, a roughly 50% (figure 9a) and 75% (figure 9b) duty cycle operation is conceptually presented showing the operation of switches (43-46) as indicated. Again, although not shown, operation from 0% to 100% is possible, of course. As may be understood in the context of comparing the operations of switches (43 & 44) and switches (46 & 45), the synchronous and opposing modes of control can be seen. These switches can be sequentially operated so that the outputs of each converter oppose each other and are switched at different times. As with figures 2a and 2b, this also offer advantages such that the opposing modes of operation can compensate for and offset an effect of each other in the combiner circuitry (9) and thus allow lower energy storage and more efficient operation.

As mentioned earlier, embodiments of the invention can operate at high operational voltages. Whereas in most, more traditional systems, output efficiency varied across the operational regime as shown in the curve (53) in figure 3, in embodiments of the present invention, the output can be relatively stable. As also indicated conceptually in figure 3 when considering the vertical axis as a type of ripple indication, mainly just the ripple varies - and even this is at a lower level of ripple than previous. The output voltage can be controlled to be relatively constant across all operational regimes without any compromise in power delivery. In fact, not only is there no loss in power delivery, the present invention can achieve higher power delivery. By utilizing a phased operational mode, this power output voltage such as present at the enhanced low photovoltaic energy storage DC output (66)(for the embodiment in figure 1), low photovoltaic inductance DC output (64)(for the embodiment in figure 4), and high efficiency photovoltaic outputs (62)(for the embodiment in figure 5 and the example in figure 7 ) can be a high multi operational regime output such that it is, at least in a photovoltaic sense, at a relatively high voltage or the like in any or even across all operational conversion regimes where substantial power is delivered. The high multi operational regime output can even be a high average photovoltaic voltage output (averaged across the range of operation, an occurrence-based range of delivery, or a range of typical expected operation). This high average photovoltaic voltage output or high multi operational regime output can be controlled to be near or even at the maximum desired or allowable for enhanced efficiency, perhaps less some guard band tolerance. Thus, embodiments can be configured or controlled to achieve an at least about 80%, 90%, or even 95% or more of a maximum voltage photovoltaic output across a typical operational range.

Beyond merely the level of voltage, embodiments can also present particular levels of high efficiency such as at sweet spots or the like. Considering the diagram of figure 3 as conceptually depicting temperature effect with a hot temperature generation at or near the 100% duty cycle and cold temperature operation at or near the 50% duty cycle, it can be understood that most significant, nominal operation will often occur in the 50% to 100% range. As discussed above with respect to the sweet spots shown conceptually in figure 3, designs can present dual nominal operational range high efficiency photovoltaic power outputs where sweet spot operation exists at two substantial power delivery locations. This is shown conceptually in figure 3 at 50% & 100% for the embodiments characterized as the half duty cycle energy configuration embodiments, and at 50%, 75%, and 100% for the embodiments characterized as the quarter duty cycle energy embodiments. Similarly, embodiments can be considered as presenting at least one high efficiency converted power generation or delivery mode photovoltaic output such as those referenced above and may even provide a two or dual high efficiency spots at which power conversion or delivery occurs.

In providing a low inductance output or low energy storage conversion, both the energy storage experienced at an input and at an output can be unusually low, at least from a photovoltaic perspective. Input inductance can be particularly low for the module level converter designs. This can be significant and can benefit the applied load perhaps such as the photovoltaic DC-AC inverter (12). Through proper coordination, this can offer advantages and can even encourage the use of the integrated design such as the combined high efficiency DC-DC-AC photovoltaic converter (16) design shown in figure 1.

As previously mentioned, a low energy storage converter, perhaps comprising a low energy storage, a low energy inductance, and/or a low energy capacitance, are advantages of the present invention. Recalling that figure 3 can be viewed as conceptually indicating the amount of ripple current storage energy across the duty cycle range, it can be understood that the amount of storage energy is significantly reduced through embodiments of the present invention. Whereas traditional systems indicate significant energy storage needs equivalent to a full cycle of ripple energy (as suggested by the peak height of curve (53) at 50%), in embodiments of the present invention, this energy can be considerably reduced by half or even a quarter as shown. Specifically, for a 50% to 100% design shown by curve (54), the peak height at 25% and 75% is about one-half the amount of energy storage indicated for a traditional system with equivalent switching frequency, equivalent types of switches, and the like. Similarly, for a 25% to 50% design shown by curve (55), the peak height at about 12½%, 37½%, etc. is about one-quarter the amount of energy storage indicated for a traditional system. The reduced values of conversion energy storage, inductance, and capacitance can be achieved at these reduced levels. Thus, for the embodiments characterized as the half duty cycle energy configuration embodiments, such designs can have a not more than about one-half duty cycle range ripple current photovoltaic energy storage converter, a not more than about one-half of traditional photovoltaic energy storage converter, a not more than about one-half duty cycle range ripple current photovoltaic energy storage inductor, a not more than about one-half of traditional photovoltaic energy storage inductor, a not more than about one-half duty cycle range ripple current photovoltaic energy storage capacitor, and a not more than about one-half of traditional photovoltaic energy storage capacitor. Similarly, for the embodiments characterized as the quarter duty cycle energy configuration embodiments, such designs can have a not more than about one-quarter duty cycle range ripple current photovoltaic energy storage converter, a not more than about one-quarter of traditional photovoltaic energy storage converter, a not more than about one-quarter duty cycle range ripple current photovoltaic energy storage inductor, a not more than about one-quarter of traditional photovoltaic energy storage inductor, a not more than about one-quarter duty cycle range ripple current photovoltaic energy storage capacitor, and a not more than about one-quarter of traditional photovoltaic energy storage capacitor. Similar aspects can exist for other embodiments (one-eighth, one-tenth, etc.) This can allow greater power delivery to the load such as the photovoltaic DC-AC inverter (12) or the like.

A further embodiment of the invention is illustrated in figure 6. In this design, an individual panel (19) can be enhanced by providing an interpanel or other conversion design that may be integral to, attached to, or provided with the panel (19). In this embodiment, multiple photovoltaic power cells (20) can be aggregated perhaps conceptually to present a solar panel (19) perhaps in its own assembly. The solar panel (19) power delivery can be conceptually split at some point and so there can be at least one split panel DC-DC photovoltaic converter (68). As discussed above, this can actually be comprised of two converters, perhaps such as a base phase DC-DC photovoltaic converter (6) and the altered phase DC-DC photovoltaic converter (8). These converters can have their outputs combined through combiner circuitry to provide a conversion combined photovoltaic DC output and this type of combiner circuitry can be configured as an interpanel photovoltaic cell addition circuitry (70).

The split panel DC-DC photovoltaic converter (68) can have affirmative switches as shown, that may be controlled by an internal or external duty cycle controller (51) to provide a high efficiency (or low energy storage or low inductance) photovoltaic DC output (69). Again this can be configured as to have a tapped magnetically coupled inductor arrangement or a buck converter appearing arrangement. Each can include a low photovoltaic energy storage inductor (17), a low photovoltaic inductance DC output, and a low energy storage output capacitor (18) as discussed above. This type of low photovoltaic energy storage DC-DC photovoltaic converter (59) can achieve the advantages discussed above. It may or may not require a photovoltaic boundary output controller.

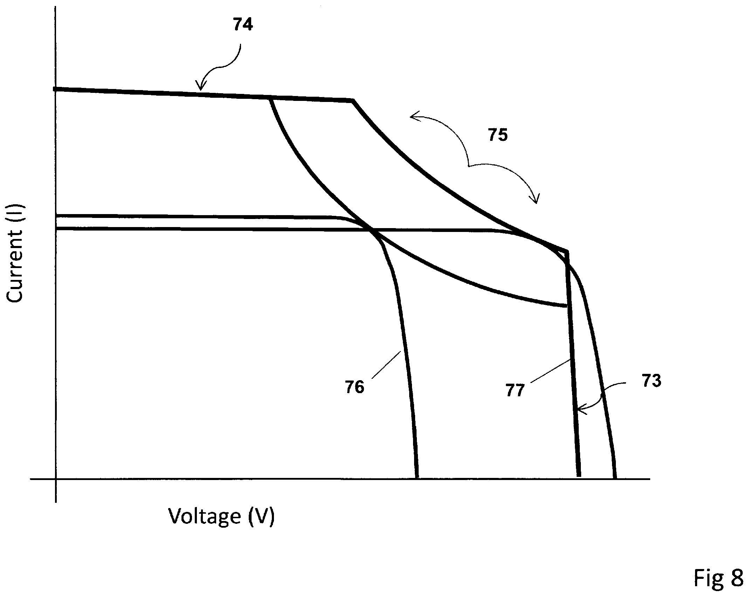

As shown in figure 8, for those embodiments of any of the above that include a photovoltaic boundary output controller (63), it may be understood that this controller can control voltage (73), current (74), maximum power point (75), power delivery (perhaps even by over voltage boundary control to regulate the output power), or other aspects that may need to be limited such as to meet regulatory concerns or the like. This may, of course, exist for high temperature operation (76) or low temperature operation (77). Voltage control can be the most important for regulatory and other reasons, and so embodiments can present some controller as a photovoltaic output voltage limit controller. The photovoltaic boundary output controller (63) can limit output at a boundary hierarchally, that is with an ordered decisional process as to which limit applies and overrides other limits as well. This control can also be optimized for the inverter, inverter input sweet spot control, or otherwise. Some such levels are shown in figure 8. Inverter optimization control can be provided as one way of achieving converter operation that is optimized for a load, perhaps such as a photovoltaic DC-AC inverter (12). As such, embodiments may include (again, separately or as part of an existing controller or control software) a photovoltaic inverter optimized converter controller.

As mentioned above, the above converter and other inventive designs can be applied to a wide range of power situations. Almost any varying source of power can be enhanced by such power conversion and control. These powers can be consumer power, industrial power, individual consumer or such device or battery power, and even large scale grid power sources, and all such applications should be understood as encompassed within the present application and disclosure.

As can be easily understood from the foregoing, the basic concepts of the present invention may be embodied in a variety of ways. It involves both conversion techniques as well as devices to accomplish the appropriate conversion. In this application, the conversion techniques are disclosed as part of the results shown to be achieved by the various devices described and as steps which are inherent to utilization. They are simply the natural result of utilizing the devices as intended and described. In addition, while some devices are disclosed, it should be understood that these not only accomplish certain methods but also can be varied in a number of ways. Importantly, as to all of the foregoing, all of these facets should be understood to be encompassed by this disclosure.

The discussion included in this application is intended to serve as a basic description. The reader should be aware that the specific discussion may not explicitly describe all embodiments possible; many alternatives are implicit. It also may not fully explain the generic nature of the invention and may not explicitly show how each feature or element can actually be representative of a broader function or of a great variety of alternative or equivalent elements. Again, these are implicitly included in this disclosure. Where the invention is described in device-oriented terminology, each element of the device implicitly performs a function. Apparatus claims may not only be included for the device described, but also method or process claims may be included to address the functions the invention and each element performs. Neither the description nor the terminology is intended to limit the scope of the claims that will be included in any subsequent patent application Other embodiments are possible; the scope of protection of the invention is only limited by the appended claims.

### REFERENCES

### U.S.PATENTS

| Patent Number | Kind Code | Issue Date | Name of Patentee or Applicant of cited Document |
|---|---|---|---|
| 6696823 | | 2004-02-24 | IKOR ACQUISITION CORP |

### U.S.PATENT APPLICATION PUBLICATIONS

| Publication Number | Kind Code | Publication Date | Name of Patentee or Applicant of cited Document |
|---|---|---|---|
| 20120223584 | A1 | 2012/09/06 | AMPT, LLC |
| 20120032515 | A1 | 2012-02-09 | AMPT, LLC |

### FOREIGN PATENT DOCUMENTS

| Foreign Document Number | Country Code | Kind Code | Publication Date | Name of Patentee or Applicant of cited Document |
|---|---|---|---|---|
| WO 02/17469 | WO | A1 | 2002-02-28 | IKOR ACQUISITION CORP |
| 2009/051853 | WO | A1 | 2009-04-23 | AMPT, LLC |

## Claims

1. A method of highly efficiently delivering solar energy power comprising the steps of:
accepting a first power from a first photovoltaic source of power (5) by a DC input port of a base phase photovoltaic DC-DC converter (6); base phase DC-DC converting (6) said first power (5) by utilizing a first tapped magnetically coupled inductor (56) with a first inductor tap (57) to output a base phase DC power delivery (71) connected to said first inductor tap (57), wherein both inputs of said first tapped magnetically coupled inductor (56) are connected to both respective midpoints (58) of said base phase photovoltaic DC-DC converter (6); accepting a second power from a second photovoltaic source of power (7) by a DC input port of an altered phase photovoltaic DC-DC converter (8); altered phase DC-DC converting (8) said second power by utilizing a second tapped magnetically coupled inductor (56) with a second inductor tap (57) to output an altered phase DC power delivery (72) connected to said second inductor tap (57), wherein both inputs of said second tapped magnetically coupled inductor (56) are connected to both respective midpoints (58) of said altered phase photovoltaic DC-DC converter (8); synchronous phase controlling (11) said step of base phase DC-DC converting said first power with said step of altered phase DC-DC converting said second power; low storage inductance series power combining (9) said base phase DC power delivery (71) with said altered phase DC power delivery (72) through additive voltage circuitry that includes a low inductance storage series combination inductor (17) connected between said first and second inductor taps to add an output voltage of said base phase DC power delivery to an output voltage of said altered phase DC power delivery with a low energy storage output capacitor (18) to provide a conversion combined photovoltaic DC output (10) at a maximum power point (75).

2. A method of highly efficiently delivering solar energy power as described in claim 1 wherein said step of low storage inductance, series power combining said base phase DC power delivery (71) with said altered phase DC power delivery (72) comprises the step of adding said voltages through additive voltage circuitry that includes a not more than about one-half duty cycle range ripple current photovoltaic energy storage inductor.

3. A method of highly efficiently delivering solar energy power as described in claim 2 wherein said step of low storage inductance, series power combining (9) said base phase DC power delivery (71) with said altered phase DC power delivery (72) comprises the step of adding said voltages through a not more than about one-quarter duty cycle range ripple current photovoltaic energy storage inductor.

4. A method of highly efficiently delivering solar energy power as described in claim 1 wherein said step of synchronous phase controlling (11) comprises the step of synchronously duty cycle controlling.

5. A method of highly efficiently delivering solar energy power as described in claim 4 wherein said step of synchronously duty cycle controlling comprises the step of common duty cycle controlling.

6. A method of highly efficiently delivering solar energy power as described in claim 4 and further comprising the steps of:
- establishing said conversion combined photovoltaic DC output (10) as a converted DC photovoltaic input to a photovoltaic DC-AC inverter; and
- inverting said converted DC photovoltaic input into a photovoltaic AC power output.

7. A method of highly efficiently delivering solar energy power as described in claim 1 wherein said step of synchronous phase controlling (11) comprises the step of common timing signal controlling.

8. A method of highly efficiently delivering solar energy power as described in claim 1 wherein said step of synchronous phase controlling comprises the step of opposing phase controlling.

9. A method of highly efficiently delivering solar energy power as described in claim 1 wherein said inductor between said inductor taps (57) comprises a low photovoltaic energy storage inductor (17).

10. A method of highly efficiently delivering solar energy power as described in claim 1 wherein said step of low storage inductance, series power combining said base phase DC power delivery (6) with said altered phase DC power delivery (8) comprises the step of establishing a double maximum voltage arrangement.

11. A high efficiency solar energy power system comprising: a first photovoltaic source of power (5); a base phase DC-DC photovoltaic converter (6) connected with its input port to said first photovoltaic source of power (5) and that establishes a base phase DC power delivery (71), said base phase DC-DC photovoltaic converter (6) comprising a first tapped magnetically coupled inductor (56) with a first inductor tap (57), wherein both inputs of said first tapped magnetically coupled inductor (56) are connected to both respective midpoints (58) of said base phase photovoltaic DC-DC converter (6); a second photovoltaic source of power (7); an altered phase DC-DC photovoltaic converter (8) connected with its input ports to said second photovoltaic source of power (7) and that establishes an altered phase DC power delivery (72), said altered phase DC-DC photovoltaic converter (8) comprising a second tapped magnetically coupled inductor (56) with a second inductor tap (57), wherein both inputs of said second tapped magnetically coupled inductor (56) are connected to both respective midpoints (58) of said altered phase photovoltaic DC-DC converter (8); a synchronous phase control circuitry (11) to which said base phase DC power delivery (71) and said altered phase DC power delivery (72) are switch timing responsive; low stored energy inductance series power additive combiner circuitry (9) connecting said base phase DC power delivery (71) and said altered phase DC power delivery (72), and comprising a low inductance storage series combination inductor (17) connected between said first and second inductor taps (57) to add an output voltage of said base phase DC power delivery to an output voltage of said altered phase DC power delivery with a low energy storage output capacitor to provide a conversion combined photovoltaic DC output (10) at a maximum power point.

12. A high efficiency solar energy power system as described in claim 11 wherein said low stored energy inductance, series power combination inductor (17) comprises not more than about one half duty cycle range ripple current photovoltaic energy storage inductor.

13. A high efficiency solar energy power system as described in claim 11 wherein said low stored energy inductance, series power additive combination inductor (17) comprises a not more than about one-quarter duty cycle range ripple photovoltaic energy storage inductor.

14. A high efficiency solar energy power system as described in claim 11 wherein said synchronous phase control circuitry (11) comprises a common duty cycle controller to which said base phase DC-DC photovoltaic converter and said altered phase DC-DC photovoltaic converter are each responsive.

15. A high efficiency solar energy power system as described in claim 11 wherein said synchronous phase control circuitry (11) comprises opposing phase control circuitry.

16. A high efficiency solar energy power system as described in claim 15 wherein said base phase DC-DC photovoltaic converter and said altered phase DC-DC photovoltaic converter each comprise a buck switching circuitry.

## Patentansprüche

1. Verfahren zur hocheffizienten Abgabe von Solarenergieleistung, das die folgenden Schritte umfasst: Aufnehmen einer ersten Leistung von einer ersten photovoltaischen Leistungsquelle (5) durch einen DC-Eingangsanschluss eines Basisphasen-Photovoltaik-DC/DC-Wandlers (6); Basisphasen-DC/DC-Wandeln (6) der ersten Leistung (5) durch Verwendung einer ersten magnetisch gekoppelten Induktivität (56) mit Abgriff mit einem ersten Induktivitätsabgriff (57), um eine Basisphasen-DC-Leistungsabgabe (71) auszugeben, die mit dem ersten Induktivitätsabgriff (57) verbunden ist, wobei beide Eingänge der ersten magnetisch gekoppelten Induktivität (56) mit Abgriff mit beiden jeweiligen Mittelpunkten (58) des Basisphasen-Photovoltaik-DC/DC-Wandlers (6) verbunden sind; Aufnehmen einer zweiten Leistung von einer zweiten photovoltaischen Leistungsquelle (7) durch einen DC-Eingangsanschluss eines phasenveränderten Photovoltaik-DC/DC-Wandlers (8); mit geänderter Phase DC/DC-Wandeln (8) der zweiten Leistung unter Verwendung einer zweiten magnetisch gekoppelten Induktivität (56) mit Abgriff mit einem zweiten Induktivitätsabgriff (57), um eine DC-Leistungsabgabe (72) mit geänderter Phase abzugeben, die mit dem zweiten Induktivitätsabgriff (57) verbunden ist, wobei beide Eingänge der zweiten magnetisch gekoppelten Induktivität (56) mit Abgriff mit geänderter Phase mit beiden jeweiligen Mittelpunkten (58) des phasenveränderten Photovoltaik-DC/DC-Wandlers (8) verbunden sind; synchrone Phasensteuerung (11) des Schrittes der Basisphasen-DC/DC-Wandelns der ersten Leistung mit dem Schritt der phasenveränderten DC/DC-Wandelns der zweiten Leistung; Kombinieren (9), in Serienleistung mit niedriger Speicherinduktivität, der Basisphasen-DC-Leistungsabgabe (71) mit der phasenveränderten DC-Leistungsabgabe (72) durch eine additive Spannungsschaltung, die eine niederinduktive Speicher-Serienkombinations-Induktivität (17) beinhaltet, die zwischen den ersten und zweiten Induktivitätsabgriffen geschaltet ist, um eine Ausgangsspannung der Basisphasen-DC-Leistungsabgabe zu einer Ausgangsspannung der phasenveränderten DC-Leistungsabgabe mit einem Ausgangskondensator (18) mit niedriger Energiespeicherung zu addieren, um einen wandlungskombinierte photovoltaischen DC-Ausgang (10) bei einem maximalen Leistungspunkt (75) bereitzustellen.

2. Verfahren zur hocheffizienten Abgabe von Solarenergieleistung nach Anspruch 1, wobei der Schritt des Kombinierens (9), in Serienleistung mit niedriger Speicherinduktivität, der Basisphasen-DC-Leistungsabgabe (71) mit der phasenveränderten DC-Leistungsabgabe (72) den Schritt des Addierens der Spannungen durch eine additive Spannungsschaltung umfasst, die eine photovoltaische Energiespeicherinduktivität mit Welligkeitsstrom im Bereich von nicht mehr als etwa einem halben Tastgrad umfasst.

3. Verfahren zur hocheffizienten Abgabe von Solarenergieleistung nach Anspruch 2, wobei der Schritt des Kombinierens (9), in Serienleistung mit niedriger Speicherinduktivität, der Basisphasen-DC-Leistungsabgabe (71) mit der phasenveränderten DC-Leistungsabgabe (72) den Schritt des Addierens der Spannungen über eine photovoltaische Energiespeicherinduktivität mit Welligkeitsstrom im Bereich von nicht mehr als etwa einem Viertel des Tastgrads umfasst.

4. Verfahren zur hocheffizienten Abgabe von Solarenergieleistung nach Anspruch 1, wobei der Schritt der synchronen Phasensteuerung (11) den Schritt der synchronen Tastgradsteuerung umfasst.

5. Verfahren zur hocheffizienten Abgabe von Solarenergieleistung nach Anspruch 4, wobei der Schritt der synchronen Tastgradsteuerung den Schritt der gemeinsamen Tastgradsteuerung umfasst.

6. Verfahren zur hocheffizienten Abgabe von Solarenergieleistung nach Anspruch 4, des Weiteren umfassend die Schritte:
- Erzeugen des wandlungskombinierten photovoltaischen DC-Ausgangs (10) als einen umgewandelten photovoltaischen DC-Eingang in einen photovoltaischen DC/AC-Wechselrichter; und
- Invertieren des umgewandelten photovoltaischen DC-Eingangs in einen photovoltaischen AC-Leistungsausgang.

7. Verfahren zur hocheffizienten Abgabe von Solarenergieleistung nach Anspruch 1, wobei der Schritt der synchronen Phasensteuerung (11) den Schritt der gemeinsamen Taktsignalsteuerung umfasst.

8. Verfahren zur hocheffizienten Abgabe von Solarenergieleistung nach Anspruch 1, wobei der Schritt der synchronen Phasensteuerung (11) den Schritt der entgegengesetzten Phasensteuerung umfasst.

9. Verfahren zur hocheffizienten Abgabe von Solarenergieleistung nach Anspruch 1, wobei die Induktivität zwischen den Induktivitätsabgriffen (57) eine Induktivität (17) mit niedriger photovoltaischer Energiespeicherung umfasst.

10. Verfahren zur hocheffizienten Abgabe von Solarenergieleistung nach Anspruch 1, wobei der Schritt des Kombinierens, in Serienleistung mit niedriger Speicherinduktivität, der Basisphasen-DC-Leistungsabgabe (6) mit der phasenveränderten DC-Leistungsabgabe (8) den Schritt des Einrichtens einer Anordnung mit doppelter Maximalspannung umfasst.

11. Hocheffizientes Solarenergie-Leistungssystem umfassend: eine erste photovoltaische Leistungsquelle (5); einen Basisphasen-DC/DC-Photovoltaikwandler (6), der mit seinem Eingangsanschluss mit der ersten photovoltaischen Leistungsquelle (5) verbunden ist und der eine Basisphasen-DC-Leistungsabgabe (71) herstellt, wobei der Basisphasen-DC/DC-Photovoltaikwandler (6) eine erste magnetisch gekoppelte Induktivität (56) mit Abgriff mit einer ersten Induktivitätsabgriff (57) umfasst, wobei beide Eingänge der ersten magnetisch gekoppelten Induktivität (56) mit Abgriff mit beiden jeweiligen Mittelpunkten (58) des Basisphasen-DC/DC-Photovoltaikwandlers (6) verbunden sind; eine zweite photovoltaische Stromquelle (7); einen phasenveränderten DC/DC-Photovoltaikwandler (8), der mit seinen Eingangsanschlüssen mit der zweiten photovoltaischen Leistungsquelle (7) verbunden ist und der eine DC-Leistungsabgabe (72) mit veränderter Phase erzeugt, wobei der phasenveränderte DC/DC-Photovoltaikwandler (8) eine zweite magnetisch gekoppelte Induktivität (56) mit Abgriff mit einem zweiten Induktivitätsabgriff (57) umfasst, wobei beide Eingänge der zweiten magnetisch gekoppelten Induktivität (56) mit Abgriff mit beiden jeweiligen Mittelpunkten (58) des phasenveränderten DC/DC-Photovoltaikwandlers (8) verbunden sind; eine synchrone Phasensteuerungsschaltung (11), auf die die Basisphasen-DC-Leistungsabgabe (71) und die phasenveränderte DC-Leistungsabgabe (72) schaltzeitabhängig sind; additive Kombinationsschaltung (9) mit niedriger Speicherenergieinduktivität in Serienleistung, die die Basisphasen-DC-Leistungsabgabe (71) und die phasenveränderte DC-Leistungsabgabe (72) verbindet und eine niederinduktive Speicher-Serienkombinations-Induktivität (17) umfasst, die zwischen die ersten und zweiten Induktivitätsabgriffe (57) geschaltet ist, um eine Ausgangsspannung der Basisphasen-DC-Leistungsabgabe mit einer Ausgangsspannung der phasenveränderten DC-Leistungsabgabe mit einem Ausgangskondensator mit niedriger Energiespeicherung zu addieren, um einen wandlungskombinierten photovoltaischen DC-Ausgang (10) bei einem maximalen Leistungspunkt bereitzustellen.

12. Hocheffizientes Solarenergie-Leistungssystem nach Anspruch 11, wobei die niederinduktive Speicher-Serienkombinations-Induktivität (17) eine photovoltaische Energiespeicherinduktivität mit Welligkeitsstrom im Bereich von nicht mehr als etwa einem halben Tastgrad umfasst.

13. Hocheffizientes Solarenergie-Leistungssystem nach Anspruch 11, wobei die niederinduktive Speicher-Serienkombinations-Induktivität (17) eine photovoltaische Energiespeicherinduktivität mit Welligkeitsstrom im Bereich von nicht mehr als etwa einem Viertel Tastgrad umfasst.

14. Hocheffizientes Solarenergie-Leistungssystem nach Anspruch 11, wobei die Synchronphasen-Steuerschaltung (11) eine gemeinsame Tastgradsteuerung umfasst, auf die der Basisphasen-DC/DC-Photovoltaikwandler und der phasenveränderte DC/DC-Photovoltaikwandler jeweils ansprechen.

15. Hocheffizientes Solarenergie-Leistungssystem nach Anspruch 11, wobei die Synchronphasen-Steuerschaltung (11) entgegengesetzte Phasensteuerschaltung umfasst.

16. Hocheffizientes Solarenergie-Leistungssystem nach Anspruch 15, wobei der Basisphasen-DC/DC-Photovoltaikwandler und der phasenveränderte DC/DC-Photovoltaikwandler jeweils einen Buck-Schaltkreis umfassen.

## Revendications

1. Procédé d'alimentation électrique solaire de haut rendement comprenant les étapes suivantes :
acceptation d'une première puissance provenant d'une première source d'énergie photovoltaïque (5) par un port d'entrée CC d'un convertisseur photovoltaïque CC-CC en phase de base (6) ;
conversion CC-CC en phase de base (6) de ladite première puissance (5) par utilisation d'un premier inducteur à couplage magnétique à prises (56) avec une première prise d'inducteur (57) pour produire une alimentation électrique CC en phase de base (71) connectée à ladite première prise d'inducteur (57),
dans lequel les deux entrées dudit premier inducteur à couplage magnétique à prises (56) sont connectées aux deux points médians respectifs (58) dudit convertisseur photovoltaïque CC-CC en phase de base (6) ;
acceptation d'une deuxième puissance provenant d'une deuxième source d'énergie photovoltaïque (7) par un port d'entrée CC d'un convertisseur photovoltaïque CC-CC en phase modifiée (8) ;
conversion CC-CC en phase modifiée (8) de ladite deuxième puissance par utilisation d'un deuxième inducteur à couplage magnétique à prises (56) avec une deuxième prise d'inducteur (57) pour produire une alimentation électrique CC en phase modifiée (72) connectée à ladite deuxième prise d'inducteur (57),
dans lequel les deux entrées dudit deuxième inducteur à couplage magnétique à prises (56) sont connectées aux deux points médians respectifs (58) dudit convertisseur photovoltaïque CC-CC en phase modifiée (8) ;
commande de phase synchrone (11) de ladite étape de conversion CC-CC en phase de base de ladite première puissance avec ladite étape de conversion CC-CC en phase modifiée de ladite seconde puissance ;
combinaison de puissance en série à faible inductance d'accumulation (9) de ladite alimentation électrique CC en phase de base (71) avec ladite alimentation électrique CC en phase modifiée (72) via un circuit de tension additive qui inclut un inducteur de combinaison en série à faible inductance d'accumulation (17) connecté entre lesdites première et deuxième prises d'inducteur pour ajouter une tension de sortie de ladite alimentation électrique CC en phase de base à une tension de sortie de ladite alimentation électrique CC en phase modifiée avec un condensateur de sortie à faible accumulation d'énergie (18) pour fournir une sortie CC photovoltaïque combinée de conversion (10) à un point de puissance maximale (75).

2. Procédé d'alimentation électrique solaire de haut rendement comme il est décrit dans la revendication 1, dans lequel ladite étape de combinaison de puissance en série à faible inductance d'accumulation combinant ladite alimentation électrique CC en phase de base (71) avec ladite alimentation électrique CC en phase modifiée (72) comprend l'étape consistant à ajouter lesdites tensions via un circuit de tension additive qui comprend un inducteur à accumulation d'énergie photovoltaïque à courant d'ondulation ne dépassant pas la moitié environ d'une plage de cycle de service.

3. Procédé d'alimentation électrique solaire de haut rendement comme il est décrit dans la revendication 2, dans lequel ladite étape de combinaison de puissance en série à faible inductance d'accumulation (9) combinant ladite alimentation électrique CC en phase de base (71) avec ladite alimentation électrique CC en phase modifiée (72) comprend l'étape consistant à ajouter lesdites tensions via un inducteur à accumulation d'énergie photovoltaïque à courant d'ondulation ne dépassant pas un quart environ d'une gamme de cycle de service.

4. Procédé d'alimentation électrique solaire de haut rendement comme il est décrit dans la revendication 1, dans lequel ladite étape de commande de phase synchrone (11) comprend l'étape de commande synchrone de cycle de service.

5. Procédé d'alimentation électrique solaire de haut rendement comme il est décrit dans la revendication 4, dans lequel ladite étape de commande synchrone de cycle de service comprend l'étape de commande de cycle de service commun.

6. Procédé d'alimentation électrique solaire de haut rendement comme il est décrit dans la revendication 4 et comprenant en outre les étapes suivantes :
- établissement de ladite sortie CC photovoltaïque combinée de conversion (10) en tant qu'une entrée CC photovoltaïque convertie vers un convertisseur CC-CA photovoltaïque ; et
- inversion de ladite entrée photovoltaïque CC convertie en une sortie de puissance CA photovoltaïque.

7. Procédé d'alimentation électrique solaire de haut rendement comme il est décrit dans la revendication 1, dans lequel ladite étape de commande de phase synchrone (11) comprend l'étape de commande du signal de commande temporelle commun.

8. Procédé d'alimentation électrique solaire de haut rendement comme il est décrit dans la revendication 1, dans lequel ladite étape de commande de phase synchrone comprend l'étape de commande de phase opposée.

9. Procédé d'alimentation électrique solaire de haut rendement comme il est décrit dans la revendication 1, dans lequel ledit inducteur entre lesdites prises d'inducteur (57) comprend un inducteur à faible accumulation d'énergie photovoltaïque (17).

10. Procédé d'alimentation électrique solaire de haut rendement comme il est décrit dans la revendication 1, dans lequel ladite étape de combinaison de puissance en série à faible inductance d'accumulation de ladite alimentation électrique CC en phase de base (6) avec ladite alimentation électrique CC en phase modifiée (8) comprend l'étape consistant à établir un arrangement de double tension maximale.

11. Système d'alimentation électrique solaire de haut rendement comprenant :
une première source d'énergie photovoltaïque (5) ;
un convertisseur photovoltaïque CC-CC en phase de base (6) connecté par son port d'entrée à ladite première source d'énergie photovoltaïque (5) et qui établit une alimentation électrique CC en phase de base (71), ledit convertisseur photovoltaïque CC-CC en phase de base (6) comprenant un premier inducteur à couplage magnétique à prises (56) avec une première prise d'inducteur (57), dans lequel les deux entrées dudit premier inducteur à couplage magnétique à prises (56) sont connectées aux deux points médians respectifs (58) dudit convertisseur photovoltaïque CC-CC en phase de base (6) ;
une deuxième source d'énergie photovoltaïque (7) ;
un convertisseur photovoltaïque CC-CC en phase modifiée (8) connecté par ses ports d'entrée à ladite deuxième source d'énergie photovoltaïque (7) et qui établit une alimentation électrique CC en phase modifiée (72), ledit convertisseur photovoltaïque CC-CC en phase modifiée (8) comprenant un deuxième inducteur à couplage magnétique à prises (56) avec une deuxième prise d'inducteur (57), dans lequel les deux entrées dudit deuxième inducteur à couplage magnétique à prises (56) sont connectées aux deux points médians respectifs (58) dudit convertisseur photovoltaïque CC-CC en phase modifiée (8) ;
un circuit de commande de phase synchrone (11) auquel ladite alimentation électrique CC en phase de base (71) et ladite alimentation électrique CC en phase modifiée (72) sont réactifs en commande temporelle de commutation ;
un circuit de combinaison de puissance additive en série à faible inductance d'énergie accumulée (9) connectant ladite alimentation électrique CC en phase de base (71) et ladite alimentation électrique CC en phase modifiée (72), et comprenant un inducteur de combinaison en série à faible inductance d'accumulation (17) connecté entre lesdites première et deuxième prises d'inducteur (57) pour ajouter une tension de sortie de ladite alimentation électrique CC en phase de base à une tension de sortie de ladite alimentation électrique CC en phase modifiée avec un condensateur de sortie à faible accumulation d'énergie pour fournir une sortie CC photovoltaïque combinée de conversion (10) à un point de puissance maximale.

12. Système d'alimentation électrique solaire de haut rendement comme il est décrit dans la revendication 11, dans lequel ledit inducteur de combinaison d'énergie en série à faible inductance d'énergie accumulée (17) comprend un inducteur à accumulation d'énergie photovoltaïque à courant d'ondulation ne dépassant pas la moitié environ d'une gamme de cycle de service.

13. Système d'alimentation électrique solaire de haut rendement comme il est décrit dans la revendication 11, dans lequel ledit inducteur de combinaison additive d'énergie en série à faible inductance d'énergie accumulée (17) comprend un inducteur à accumulation d'énergie photovoltaïque à courant d'ondulation de pas plus du quart environ d'une plage de cycle de service.

14. Système d'alimentation électrique solaire de haut rendement comme il est décrit dans la revendication 11, dans lequel ledit circuit de commande de phase synchrone (11) comprend un régulateur de cycle de service commun auquel ledit convertisseur photovoltaïque CC-CC en phase de base et ledit convertisseur photovoltaïque CC-CC en phase modifiée sont chacun réactifs.

15. Système d'alimentation électrique solaire de haut rendement comme il est décrit dans la revendication 11, dans lequel ledit circuit de commande de phase synchrone (11) comprend un circuit de commande de phase opposée.

16. Système d'alimentation électrique solaire de haut rendement comme il est décrit dans la revendication 15, dans lequel ledit convertisseur photovoltaïque CC-CC en phase de base et ledit convertisseur photovoltaïque CC-CC en phase modifiée comprennent chacun un circuit de commutation à découpage.
